# EUROPEAN PATENT SPECIFICATION

(11) **EP 1 739 333 B1**
(45) Date of publication and mention of the grant of the patent: **17.09.2008**
(21) Application number: 05105924.4
(22) Date of filing: 30.06.2005
(51) Int. Cl.: F16K 31/00, F16K 11/10

(54) **Thermostatic mixing valve**
Thermostatisches Mischventil
Mitigeur thermostatique

(43) Date of publication of application: 03.01.2007
(73) Proprietor: Esbe AB, 330 21 Reftele (SE)
(72) Inventor: Bengtsson, Dan, 333 93 SKEPPSHULT (SE); Hallberg, Henrik, 330 10, BREDARYD (SE)
(74) Representative: Hjalmarsson, Magnus Axel

(56) References cited:
- US-A- 3 870 080
- US-A- 5 123 593
- US-A- 5 967 409
- US-A- 6 082 624

## Description

### Technical Field of the Invention

The present invention relates to a thermostatic mixing valve comprising a valve housing with a hot fluid inlet, a cold fluid inlet, a fluid mixing chamber for receiving fluid from the hot and the cold fluid inlet, and a fluid outlet from which the fluid exits the mixing chamber, a spring biased valve body comprising a valve cone and a thermoresponsive control member responding to the temperature in the mixing chamber by means of a piston slidably engaged with said member, and an actuator for presetting the desired fluid temperature in the mixing chamber by defining an end position for the piston, wherein the valve body is adapted to be moved by the piston in response to the preset temperature during a normal operating mode.

### Background Art

Thermostatic mixing valves are used in controlling for instance water temperature in heating systems.

Thermostatic mixing valves are well known. A mixing valve of this type includes an actuator with an adjustment screw, which is rotated for presetting the value of the temperature of the output fluid. A valve member is controlled by a temperature responsive element to regulate the temperature according to the preset temperature.

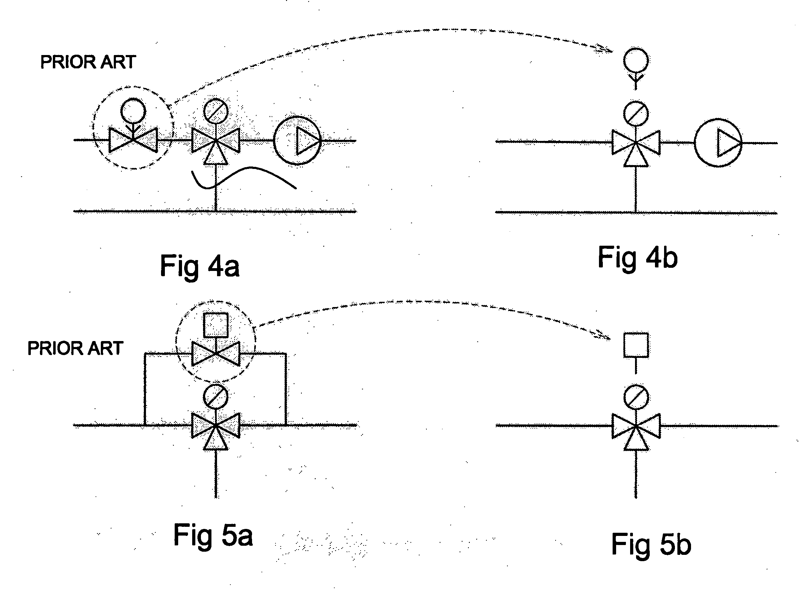

In certain applications it is necessary or desirable to be able to override or bypass the preset temperature, for instance for security reasons to close the hot water inlet and open the cold water inlet at risk of overheating. A manual override heat sensitive valve has been described in document US 5 123 503. Another example is hot water flushing, with a closed cold water inlet and an opened hot water inlet, for killing legionella bacteria or for heating the pipings at low temperature when there is a risk of freezing. At present these overriding operations are accomplished by means of an additional valve, connected in series or parallel with the mixing valve, as is shown in fig 4a and 5a, respectively.

### Summary of the Invention

The object of the invention is to achieve a reliable thermostatic mixing valve with overriding means which simplifies and cheapens installation. This object is achieved by means of a mixing valve of the type mentioned by way of introduction, which is characterized in that the actuator has a means for overriding the operation of the piston by moving the valve body irrespective of temperature in the mixing chamber during an overriding mode, said means comprising a plunger adapted to act on a surface of the valve body, with or without affecting the piston.

The actuator has an adjustment screw for presetting the desired temperature. Preferably the plunger is inserted in a central passage in the adjustment screw and slidable therein together with a sleeve constituting the part of the thermoresponsive control member in which the piston is slidable, and preferably the plunger is arranged to act on a contact surface of the sleeve during the overriding mode, but it is also possible to act on another part of the valve body.

A preferred way of defining said end position for the piston is accomplishing with a stepped passage, forming a shoulder with larger diameter section at the end facing the valve body having a diameter corresponding to the diameter of the sleeve and with a smaller diameter section at the opposite end having a diameter corresponding to the diameter of the plunger. The plunger is in this case at the end facing the sleeve formed like a yoke with yoke arms extending past the shoulder into the larger diameter section, and a crosspiece slider is inserted in the yoke, wherein the slider has a diameter corresponding to the larger diameter section and hence rests against the shoulder.

The actuator comprises a biasing means for biasing the plunger during normal operating mode, wherein said means is adapted to release the plunger in overriding mode. The biasing means is preferably a solenoid, but can also be for instance an motor.

### Brief Description of the Drawings

By way of example preferred embodiments of the invention will be described with reference to the accompanying drawings.
Fig 1 is a cross section showing a thermostatic mixing valve according the invention in a normal operating mode.
Fig 2 is a cross section showing the mixing valve in fig 1 in an overriding mode.
Fig 3 is a cross section showing a second embodiment of the thermostatic mixing valve according the invention.
Fig 4a is a schematic drawing showing an example of a piping system with a security shut-off valve connected in series with a prior art mixing valve.
Fig 4b is a schematic drawing showing a mixing valve according the invention replacing the two valves in fig 4a.
Fig 5a is a schematic drawing showing an example of a piping system with a hot flushing valve connected in parallel with a prior art mixing valve.
Fig 5b is a schematic drawing showing a mixing valve according the invention replacing the two valves in fig 5a.

### Detailed Description of a Preferred Embodiment of the Invention

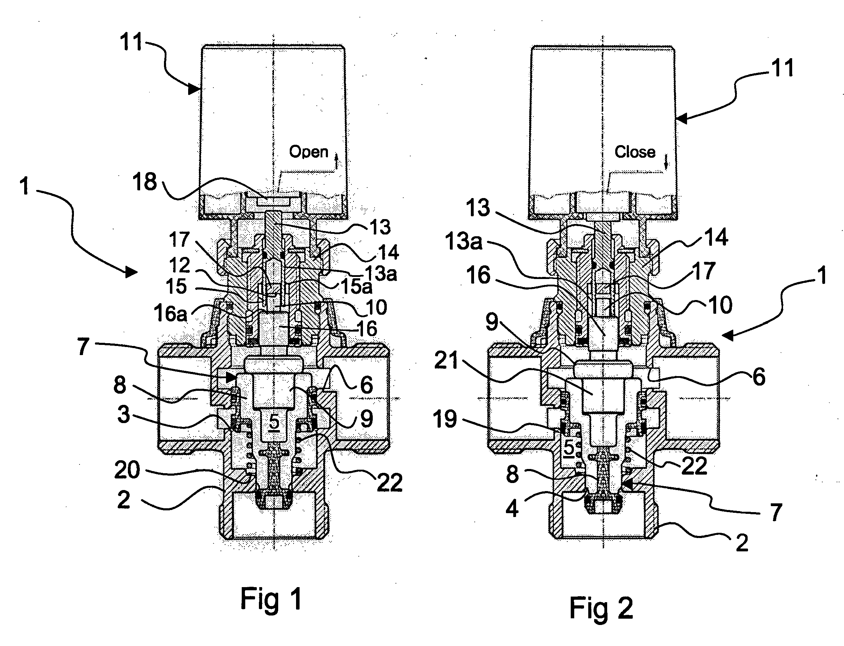

The thermostatic mixing valve 1 according the present invention, shown in the figur 1 and 2, comprises a valve housing 2 with a hot water inlet 3, a cold water inlet 4 and a mixing chamber 5 for receiving water from the hot and cold water inlets. The mixed water exits the mixing chamber through a mixed water outlet 6.

The desired fluid temperature is preset by means of a schematically shown actuator 11. The actuator 11 presets the temperature by screwing in or out an adjustment pin or screw 14 inserted in the upper part of the valve housing 2.

In the mixing chamber 5 is arranged a valve body 7 which comprises a valve cone 8 and a thermoresponsive control member 9 responding to the temperature in the mixing chamber by means of a piston 10 slidable in a sleeve 16 formed integrally with said member. The position of the adjustment screw 14 defines an end position for the piston 10 and corresponds to the desired fluid temperature in the mixing chamber.

The thermoresponsive control member 9 is arranged in the mixing chamber 5 for affecting the valve cone 8 according to the preset temperature under normal operating mode. The valve cone 8 is continuously movable between a first seat 19 with closed hot water inlet and opened cold water inlet and a second seat 20 with closed cold water inlet and opened hot water inlet. The thermoresponsive control member 9 and the valve cone 8 are movable together in the mixing chamber, immobilized in relation to each other.

The thermoresponsive control member 9 comprises a wax element enclosed in a casing 21 and responding to the temperature of the water in the mixing chamber 5 by expanding with rising temperature or contracting with falling temperature. When expanding, the piston 10, is pushed upwards in the sleeve 16, moving the valve cone 8 downwards against the action of a spring 22 arranged around the valve cone 8 between the first and the second seat. This closes the hot water inlet and opens the cold water inlet. When contracting, the valve body 7 is pushed upwards by the action of said spring 22, pressing in the piston 10 into the sleeve 16.

The actuator 11 comprises a plunger 13 for overriding the function of the piston 10 by moving the valve body 7 irrespective of temperature in the mixing chamber during an overriding mode and in the case shown in fig 2 close the hot fluid inlet and open the cold fluid inlet.

The plunger 13 is adapted to act on a contact surface 16a of the sleeve 16 during the overriding mode without affecting the piston 10.

The plunger 13 is inserted in a central passage 15 in the adjustment screw 14 and slidable therein together with the sleeve 16. The passage 15 is stepped, forming a shoulder 15a with larger diameter section at the end facing the valve body 7 and a smaller diameter section at the opposite end. The diameter of larger diameter section corresponds to the diameter of the sleeve 16 and the diameter of the smaller diameter section corresponds to the diameter of the plunger 13.

The plunger 13 is at the end facing the sleeve 16 formed like a yoke 13a with yoke arms extending past the shoulder 15a into the larger diameter section. A crosspiece slider 17, inserted in the yoke 13a, has a diameter corresponding the larger diameter section and hence rests against the shoulder 15a defining the end position for the piston 10.

In normal operating mode, shown in fig 1, the crosspiece slider 17 is abutting against the shoulder 15a and the piston 10 is in turn in abutting against the crosspiece slider 17. When screwing down the adjustment screw the shoulder 15a with the crosspiece slider 17 is moved downwards shifting regulating point for the valve.

In overriding mode the actuator 11 is acting on the plunger 13 to bypass the preset regulating point. In the overriding mode shown in fig 2 the plunger 13 with its yoke 13a is sliding past the crosspiece slider 17 and is acting directly on the contact surface on the sleeve 16, pushing the thermoresponsive control member 9 and hence the valve cone 8 downwards, fully opening the cold water inlet and closing the hot water inlet. Depending on the aim of overriding mode the valve can of course with another construction be made to open the hot water inlet and close the cold water inlet instead. In for example a floor heating system it is necessary to have an security mode in case of power failure or when there is a risk of overheating. In this mode the actuator 11 overrides the preset temperature and via the plunger 13 pushes the valve body 9 with the valve cone 8 to a position when it opens the cold water inlet and closes the hot water inlet. By changing places of hot and the cold water inlets this could be achieved with the same construction of valve.

In a water piping system where there is a need of killing legionella bacteria or when there is a risk of freezing of the water the actuator 11 by means of the plunger 13 is made to open the hot water inlet and close the cold water inlet instead.

The actuator 11 comprises a biasing means, for example a solenoid, an electrical motor or a valve for biasing the plunger 13 during normal operating mode, wherein said means is adapted to release the plunger 13 in overriding mode. The plunger 13 could also be released by means of an electric signal.

The plunger 13 could be activated automatically by means of a timer, or under a preset condition, for example a power failure or a predermined temperature, or manually.

With the mixing valve according the invention it is also possible to add additional regulating functions with externally arranged sensors making the valve react faster to large temperature variations in the incoming or outgoing fluid, creating a second control loop. The temperature of the outgoing fluid is controlled primarily by the thermoresponsive control member and secondarily, if the thermoresponsive control member is not able to adjust the temperature in an adequate degree, by displacing the regulating point.

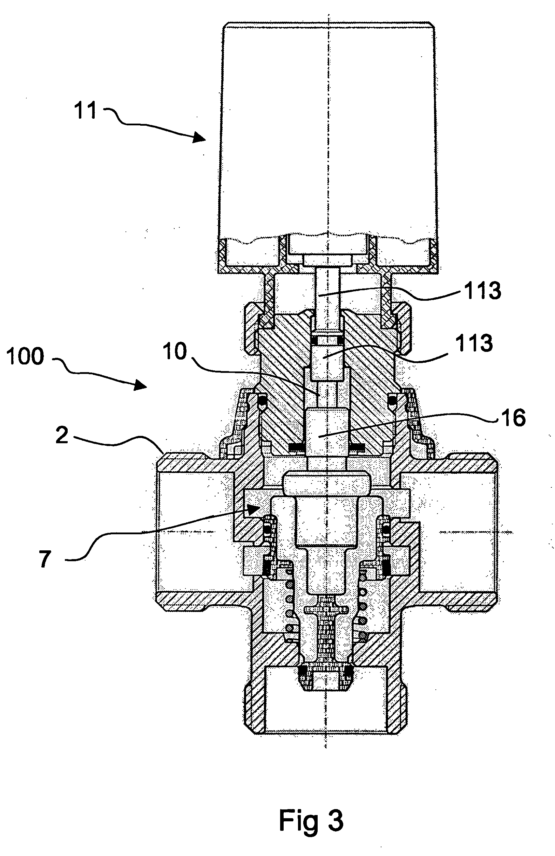

This is for example done with a motor connected to the adjustment screw for adjusting the regulating point according to signals from temperature sensors. In another embodiment, shown in fig 3, the adjustment point can be displaced by means of a plunger 113. In this case the end of the plunger 113 defines the end position for the piston 10. This valve 100 has not an adjustment screw, otherwise the valve body works in the valve housing in the same way as the valve in fig 1 and 2. Like parts have therefor the same reference numbers.

With an additional sensor sensing the outdoor temperature, the actuator can compensate for position of the adjustment screw during a period with for instance higher outdoor temperature than normal, i.e. to add a calibrating function to the actuator.

The thermostatic mixing valve has been described with reference to a preferred embodiment. This is not intended to limit the invention and it is obvious for the skilled man to make modifications within the scope of the invention as claimed. Various types of adjustment means, thermoresponsive control members and actuators could be used.

## Claims

1. A thermostatic mixing valve comprising
a valve housing (2) with a hot fluid inlet (3), a cold fluid inlet (4), a fluid mixing chamber (5) for receiving fluid from the hot and the cold fluid inlet, and a fluid outlet (6) from which the fluid exits the mixing chamber (5),
a spring biased valve body (7) comprising a valve cone (8) and a thermoresponsive control member (9) responding to the temperature in the mixing chamber (5) by means of a piston (10) slidably engaged with said member (9), and
an actuator (11) for presetting the desired fluid temperature in the mixing chamber by defining an end position (12) for the piston (10),
wherein the valve body (7) is adapted to be moved by the piston (10) in response to the preset temperature during a normal operating mode,
**characterized in that** the actuator (11) comprises a means (13) for overriding the operation of the piston (10) by moving the valve body (7) irrespective of temperature in the mixing chamber (5) during an overriding mode, said means comprising a plunger (13) adapted to act on a surface of the valve body (7).

2. A thermostatic mixing valve according to claim 1, wherein the plunger (13) is adapted to act on the valve body (7) without affecting the piston (10).

3. A thermostatic mixing valve according to claim 2,
wherein the actuator (11) comprises an adjustment screw (14) for presetting the desired temperature,
wherein the plunger (13) is inserted in a central passage (15) in the adjustment screw (14) and slidable therein together with a sleeve (16) constituting the part of the thermoresponsive control member (9) in which the piston (10) is slidable, and
wherein the plunger (13) is arranged to act on a contact surface (16a) of the sleeve (16) during the overriding mode.

4. A thermostatic mixing valve according to claim 3,
wherein the passage (15) is stepped, forming a shoulder (15a) with larger diameter section at the end facing the valve body having a diameter corresponding to the diameter of the sleeve (16) and with a smaller diameter section at the opposite end having a diameter corresponding to the diameter of the plunger (13),
wherein the plunger (13) at the end facing the sleeve (16) is formed like a yoke (13a) with yoke arms extending past the shoulder (15a) into the larger diameter section (15'), and
wherein a crosspiece slider (17), inserted in the yoke (13a), has a diameter corresponding to the larger diameter section and hence rests against the shoulder (15a) defining said end position (12) for the piston.

5. A thermostatic mixing valve according to one of claim 1-4, wherein the actuator (11) comprises a biasing means (18) for biasing the plunger (13) during normal operating mode, wherein said means is adapted to release the plunger (13) in overriding mode.

6. A thermostatic mixing valve according to claim 5, wherein biasing means is a solenoid (18).

7. A thermostatic mixing valve according to claim 3-6, wherein the actuator has means for displacing the end position (12) for the piston (10) during the normal operating mode by means of the adjustment screw (14).

8. A thermostatic mixing valve according to claim 1, wherein the actuator has means for displacing the end position (12) for the piston (10) during the normal operating mode by means of the plunger (13).

## Patentansprüche

1. Ein thermostatisches Mischventil, das aufweist
ein Ventilgehäuse (2) mit einem Einlass (2) für ein warmes Fluid, einem Einlass (4) für ein kaltes Fluid, einer Fluidmischkammer (5) zur Aufnahme des Fluids aus dem Einlass für das kalte Fluid und dem Einlass für das warme Fluid und einen Fluidauslass (6), aus dem das Fluid die Mischkammer (5) verlässt,
einen mit einer Feder vorgespannten Ventilkörper (7), der einen Ventilkegel (8) und ein thermoresponsives Steuerelement (9) aufweist, das auf die Temperatur in der Mischkammer (5) durch einen Kolben (10) reagiert, der verschiebbar in das Element (9) eingreift, und
ein Stellelement (11) zum Voreinstellen der gewünschten Fluidtemperatur in der Mischkammer durch die Definition einer Endposition (12) des Kolbens (10),
wobei der Ventilkörper (7) angepasst ist, um von dem Kolben (10) als Reaktion auf die voreingestellte Temperatur während des normalen Betriebsmodus bewegt zu werden,
**dadurch gekennzeichnet, dass**
das Stellelement (11) ein Mittel (13) aufweist, um den Betrieb des Kolbens (10) außer Kraft zu setzen, indem der Ventilkörper (7) unabhängig von der Temperatur in der Mischkammer (5) während eines Modus der Außerkraftsetzung bewegt wird, wobei das Mittel ein Druckstück (13) aufweist, das angepasst ist, um auf eine Oberfläche des Ventilkörpers (7) einzuwirken.

2. Ein thermostatische Mischventil gemäß Anspruch 1, wobei das Druckstück (13) angepasst ist, um auf den Ventilkörper (7) ohne Beeinflussung des Kolbens (10) einzuwirken.

3. Ein thermostatisches Mischventil gemäß Anspruch 2,
wobei das Stellelement (11) eine Einstellschraube (14) zum Voreinstellen der gewünschten Temperatur aufweist,
wobei das Druckstück (13) in eine mittige Durchführung (15) in der Einstellschraube (14) eingefügt und darin verschiebbar ist, zusammen mit einer Buchse (16), die den Teil des thermoresponsiven Steuerelements (9) bildet, in dem der Kolben (10) verschiebbar ist, und
wobei das Druckstück (13) angeordnet ist, um auf eine Kontaktfläche (16a) der Buchse (16) während des Modus der Außerkraftsetzung einzuwirken.

4. Ein thermostatisches Mischventil gemäß Anspruch 3, wobei die Durchführung (15) gestuft ist und einen Ansatz (15a) bildet mit einem größerem Durchmesserbereich an dem dem Ventilkörper zugewandten Ende, das einen Durchmesser entsprechend dem Durchmesser der Buchse (16) aufweist, und mit einem kleinerem Durchmesserbereich am abgewandten Ende, wobei der Durchmesser dem Durchmesser des Druckstücks (13) entspricht,
wobei das Druckstück (13) an dem der Buchse (16) zugewandten Ende wie eine Gabel (13a) ausgebildet ist, wobei sich die Gabelarme über den Ansatz (15a) hinaus in den größeren Durchmesserbereich (15') erstrecken, und
wobei ein in die Gabel (13a) eingefügter Querschieber (17) einen Durchmesser aufweist, der dem größeren Durchmesserbereich entspricht und somit am Ansatz (15a) anliegt, der die Endpositon (12) für den Kolben definiert.

5. Ein thermostatisches Mischventil gemäß einem der Ansprüche 1 bis 4,
wobei das Stellelement (11) ein Vorspannmittel (18) zum Vorspannen des Druckstücks (13) im normalen Betriebsmodus umfasst, wobei das Mittel angepasst ist, um das Druckstück (13) im Modus der Außerkraftsetzung loszulassen.

6. Ein thermostatisches Mischventil gemäß Anspruch 5, wobei das Vorspannmittel ein Magnet (18) ist.

7. Ein thermostatisches Mischventil gemäß Anspruch 3 bis 6, wobei das Stellelement über Mittel verfügt, um die Endposition (12) des Kolbens (10) während des normalen Betriebsmodus durch die Einstellschraube (14) zu verstellen.

8. Ein thermostatisches Mischventil gemäß Anspruch 1, wobei das Stellelement über Mittel verfügt, um die Endposition (12) des Kolbens (10) während des normalen Betriebsmodus durch das Druckstück (13) zu verstellen.

## Revendications

1. Vanne mélangeuse thermostatique comportant
un boîtier de vanne (2) avec une entrée de fluide chaud (3), une entrée de fluide froid (4), une chambre de mélange de fluide (5) destinée à recevoir du fluide provenant de l'entrée de fluide chaude et de l'entrée de fluide froid, et une sortie de fluide (6) par laquelle le fluide sort de la chambre de mélange (5),
un corps de soupape rappelé par ressort (7) comportant un cône de soupape (8) et un élément de commande thermosensible (9) répondant à la température dans la chambre de mélange (5) au moyen d'un piston (10) engagé de façon coulissante avec l'élément (9), et
un dispositif d'actionnement (11) destiné à préétablir la température de fluide souhaitée dans la chambre de mélange en définissant une position d'extrémité (12) pour le piston (10),
le corps de soupape (7) étant prévu pour être déplacé par le piston (10) en réponse à la température préétablie pendant un mode de fonctionnement normal,
**caractérisée en ce que** le dispositif d'actionnement (11) comporte des moyens (13) destiné à outrepasser le fonctionnement du piston (10) en déplaçant le corps de soupape (7) indépendamment de la température dans la chambre de mélange (5) dans un mode de dépassement, lesdits moyens comportant un plongeur (13) prévu pour agir sur une surface du corps de soupape (7).

2. Vanne mélangeuse thermostatique selon la revendication 1, dans laquelle le plongeur (13) est prévu pour agir sur le corps de soupape (7) sans affecter le piston (10).

3. Vanne mélangeuse thermostatique selon la revendication 2, dans laquelle le dispositif d'actionnement (11) comporte une vis de réglage (14) afin de préétablir la température souhaitée,
le plongeur (13) étant inséré dans un passage central (15) dans la vis de réglage (14) et pouvant y coulisser avec un manchon (16) constituant la partie de l'élément de commande thermosensible (9) dans lequel le piston (10) peut coulisser, et
le plongeur (13) étant prévu pour agir sur une surface de contact (16a) du manchon (16) dans le mode de dépassement.

4. Vanne mélangeuse thermostatique selon la revendication 3, dans laquelle le passage (15) est étagé, en formant un épaulement (15a) avec une section de diamètre plus grand au niveau de l'extrémité face au corps de soupape ayant un diamètre correspondant au diamètre du manchon (16) et avec une section de diamètre plus petit au niveau de l'extrémité opposée ayant un diamètre correspondant au diamètre du plongeur (13),
le plongeur (13) au niveau de l'extrémité face au manchon (16) étant sous la forme d'une chape (13a) avec des bras de chape qui s'étendent au-delà de l'épaulement (15a) dans la section de diamètre plus grand (15'), et
un élément coulissant transversal (17), inséré dans la chape (13a), a un diamètre correspondant à la section de diamètre plus grand et repose donc contre l'épaulement (15a) définissant ladite position d'extrémité (12) pour le piston.

5. Vanne mélangeuse thermostatique selon l'une des revendications 1 à 4, dans laquelle le dispositif d'actionnement (11) comporte des moyens de rappel (18) destinés à rappeler le plongeur (13) pendant le mode de fonctionnement normal, lesdits moyens étant prévus pour libérer le plongeur (13) dans le mode de dépassement.

6. Vanne mélangeuse thermostatique selon la revendication 5, dans laquelle les moyens de rappel sont constitués par un électroaimant (18).

7. Vanne mélangeuse thermostatique selon les revendications 3 à 6, dans laquelle le dispositif d'actionnement a des moyens destinés à déplacer la position d'extrémité (12) pour le piston (10) pendant le mode de fonctionnement normal au moyen de la vis de réglage (14).

8. Vanne mélangeuse thermostatique selon la revendication 1, dans laquelle le dispositif d'actionnement a des moyens destinés à déplacer la position d'extrémité (12) pour le piston (10) pendant le mode de fonctionnement normal au moyen du plongeur (13).
